# EUROPÄISCHE PATENTANMELDUNG

(11) **EP 0 916 538 A2**
(43) Veröffentlichungstag der Anmeldung: **19.05.1999**
(21) Anmeldenummer: 98121464.6
(22) Anmeldetag: 11.11.1998
(51) Int. Cl.: B60J 10/12

(54) **Deckel eines öffnungsfähigen Fahrzeugdachs**

(30) Priorität: 15.11.1997 DE 19750711
(71) Anmelder: IEE International Electronics & Engineering S.A.R.L., 2632 Luxembourg (LU); WEBASTO KAROSSERIESYSTEME GmbH, D-82131 Stockdorf (DE)
(72) Erfinder: Petri, Volker, 71134 Aidlingen (DE); Mickeler, Reinhold, 71155 Altdorf (DE); Herlemann, Werner, 71134 Aidlingen (DE); Benda, Hans, 71134 Aidlingen (DE); Lehnen, Hans Günter, 66687 Wadern-Noswinkel (DE); Lorig, Roland, 54675 Sinspelt (DE); Schmitt, Stefan, 54294 Trier (DE); Hertel, Johann, 82061 Neuried (DE); Schätzler, Walter, 82319 Starnberg (DE); Brandner, Hans, 85221 Dachau (DE); Schröferl, Thomas, 82069 Hohenschäftlarn (DE)
(74) Vertreter: Wiese, Gerhard

(57) **Zusammenfassung**

Die Erfindung betrifft einen Deckel (2) eines öffnungsfähigen Fahrzeugdachs (1) mit einer Deckelplatte (3), die im Kantenbereich von einem angeschäumten oder angespritzten Kunststoffrahmen (4) umgeben wird, der gleichzeitig zur Anbindung wenigstens eines Befestigungsteils (Deckelinnenblech 6) des Deckels dient. Erfindungsgemäß ist in den Kunststoffrahmen (4) wenigstens ein Sensorelement (8) integriert, das beim Schließen des Deckels (2) mittels einer partiellen Deformation des Kunststoffrahmens (4) ein Einklemmen eines Körperteils oder Gegenstandes (11) signalisiert.

## Beschreibung

Die Erfindung betrifft einen Deckel eines öffnungsfähigen Fahrzeugdachs gemäß dem Oberbegriff des Patentanspruchs 1.

Aus DE 297 04 030 U1 ist ein Deckel eines Schiebedachs bekannt, bei dem eine transparente Scheibe als Deckelplatte und ein in den Randbereichen darunter liegendes Befestigungsteil in Form eines abgekanteten Deckelinnnenblechs durch einen angeschäumten oder angespritzen Kunststoffrahmen miteinander verbunden sind, wobei der Kunststoffrahmen an seinem Außenumfang gleichzeitig eine Kontur zur Halterung eines Dichtungsteils aufweist.

Derartige Dichtungsteile können gemäß DE 44 27 537 A1 als Hohlkammerprofile ausgebildet sein, in welche ein druckempfindliches; streifenförmiges Sensorelement zur Erkennung eines Einklemmfalles beim Schließen des Deckels integriert ist. Das Einbringen des Sensorelements in die Hohlkammerdichtung im Extrudierverfahren und die Befestigung der Dichtung am Deckel stellen aufwendige Fertigungs- und Montageschritte dar, die die Herstellung eines Schiebedachdeckels stark verteuern.

Aus der DE-U1 93 17 291 ist ein Schaltprofil als Einklemmschutz bekannt, welches kraftoder formschlüssig, umittelbar an einem Schiebedachteil befestigbar ist. Dieses Profil ist mehrteilig ausgebildet und bedingt somit einen erhöhten Montageaufwand.

Der vorliegenden Erfindung liegt die Aufgabe zugrunde, einen Deckel für ein öffnungsfähiges Fahrzeugdach bereitzustellen, der Mittel zum Erkennen eines Einklemmfalles aufweist und kostengünstig herstellbar ist.

Diese Aufgabe wird erfindungsgemäß durch die Merkmale des Patentanspruchs 1 gelöst. Vorteilhafte Weiterbildungen der Erfindung sind den Unteransprüchen zu entnehmen.

Gemäß dem Kerngedanken der vorliegenden Erfindung wird ein druckempfindliches Sensorelement in einen zumindestens partiell verformbaren angeschäumten oder angespritzen Kunststoffrahmen eines Deckels unmittelbar integriert. Eine derartige Integration ermöglicht eine besonders einfache Verbindung eines Sensorelements mit dem Deckel. Es wird ferner eine geschützte Anordnung des Sensorelements ermöglicht, da der das Sensorelement abdeckende Kunststoffrahmen eine höhere Stabilität aufweist als beispielsweise eine Gummidichtung. Schließlich wird auch die Kontaktherstellung zwischen dem Sensorelement und einer Auswertelogik besonders erleichtert, da die elektrischen Anschlußverbindungen ebenfalls problemlos beim Umspritzen oder Umschäumen der Glasscheibe und der Verstärkungsteile mit in den Kunststoffrahmen eingebettet werden können.

Gemäß einer vorteilhaften Ausgestaltung der Erfindung ist an der Unterseite des Kunststoffrahmens eine Nut vorgesehen, die zur Aufnahme des Sensorelements dient. Eine derartige Nut kann beispielsweise von einem Werkzeugteil erzeugt werden, das gleichzeitig zur Halterung des Sensorelements beim Umschäumen oder Umspritzen dient. Das Sensorelement kann jedoch ebenso gut auch alternativ in eine beim Umspritzen oder Umschäumen mittels eines Formteils erzeugte Nut nachträglich beispielsweise durch Kleben eingebracht werden.

Gemäß einer vorteilhaften Ausführungsform weist das Sensorelement wenigstens einen der Außenkante des Kunststoffrahmens zugewandten Drucknoppen auf. Dieser Drucknoppen dient bei einer Verformung des Kunststoffrahmens im Einklemmfall zu einer Erhöhung eines punktuellen Drucks, so daß eine höhere Empfindlichkeit der Sensorik erreicht wird.

Alternativ dazu kann auch an einer dem Sensorelement zugewandten Innenwand des Kunststoffrahmens wenigstens ein Drucknoppen angeordnet sein, wie dies in ähnlicher Form von einer Wandung einer Gummidichtung bereits aus der DE 44 27 537 A1 bekannt ist.

Gemäß einer weiteren vorteilhaften Ausgestaltung ist vorgesehen, daß die Nut von einem gegenüber dem Material des Kunststoffrahmens weicheren elastischen Material ausgefüllt ist. Eine derartige Auffüllung mit weicherem Material kann besonders einfach durch ein Zwei-Komponenten-Spritzverfahren realisiert werden. Das weichere elastische Material dient zum einen der Abdeckung des Sensorelements nach unten und zum anderen der Übertragung der auf den Außenrand des Rahmens einwirkenden Druckkräfte auf das Sensorelement.

Für eine leichtere Übertragung der Druckkräfte ist es vorteilhaft, wenn eine Anlagefläche an der Außenkante des Deckels schräg nach vorne unten abfallend geneigt ist. Eine derartige Form erleichtert durch eine Linienberührung eines einklemmenden Gegenstandes an der vorspringenden unteren Außenkante des Deckels eine Verformung des Kunststoffrahmens und damit eine Erkennung des Einklemmfalles. Besonders vorteilhaft ist es dabei, wenn eine Nut im Kunststoffrahmen, die beispielsweise V-förmig oder trapezförmig ausgebildet sein kann, bis annähernd an die Oberkante des Kunststoffrahmens heranreicht und der darüberliegende Bereich ein relativ dünnwandiges Scharnier für eine sich an der Außenkante erstreckende Rippe des Kunststoffrahmens bildet. Durch eine darartige Ausbildung nach Art eines Filmscharniers erfolgt eine besonders gute Übertragung der Druckkräfte von der Außenkante zum Sensorelement.

Bevorzugt ist das Sensorelement von oben nach unten schräg nach innen abfallend angeordnet. Eine solche Anordnung ist sowohl zur Erkennung eines Einklemmfalles an der Vorderkante eines sich schließenden Schiebedachdeckels als auch zur Erkennung eines Einklemmfalles an der Hinterkante eines sich absenkenden Deckels eines Schiebehebedachs bestens geeignet.

Das bevorzugt streifenförmig ausgebildete Sensorelement erstreckt sich bei einem Deckel eines Schiebedaches zumindestens im Bereich der Vorderkante und bei einem Deckel, dessen Hinterkante über das feste Fahrzeugdach ausstellbar ist, wie einem Schiebehebedach oder einem Hebedach, auch zumindestens über einen Teil des Bereichs des Hinterkante. Das Sensorelement kann jedoch auch umlaufend längs des gesamten Außenumfangs des Deckels angeordnet sein.

Nachfolgend ist ein Ausführungsbeispiel der Erfindung anhand der Zeichnung beschrieben. Es zeigt:
- Fig. 1:: eine schematische perspektivische Darstellung eines öffnungsfähigen Fahrzeugdachs,
- Fig. 2:: einen Teillängsschnitt durch den Rand des Deckels und des angrenzenden Fahrzeugdachs mit einem eingeklemmten Gegenstand im Bereich der Vorderkante des Deckels,
- Fig. 3:: einen Teillängsschnitt mit eingeklemmtem Gegenstand im Bereich der Hinterkante des Deckels,
- Fig. 4:: eine vergrößerte Detaildarstellung gemäß Fig. 2,
- Fig. 5:: eine alternative Ausgestaltung zu den Figuren 2 - 4 mit einem mit einem Drucknoppen versehenen Sensorelement und
- Fig. 6:: eine Alternative zur Fig. 5 mit einem Drucknoppen an einer Innenwand des Kunststoffrahmens.

In einem festen Fahrzeugdach 1 ist eine Dachöffnung 5 vorgesehen, die mittels eines insgesamt mit 2 bezeichneten Deckels wahlweise verschließbar oder zumindestens teilweise freilegbar ist. Im vorliegenden Fall ist der Deckel 2 einem Schiebehebedach zugeordnet, dessen Hinterkante mittels einer nichtdargestellten Mechanik im Seitenbereich des Deckels über das feste Fahrzeugdach 1 ausstellbar und dessen Hinterkante zum anderen unter das feste Fahrzeugdach 1 absenkbar und nach hinten verschiebbar ist.

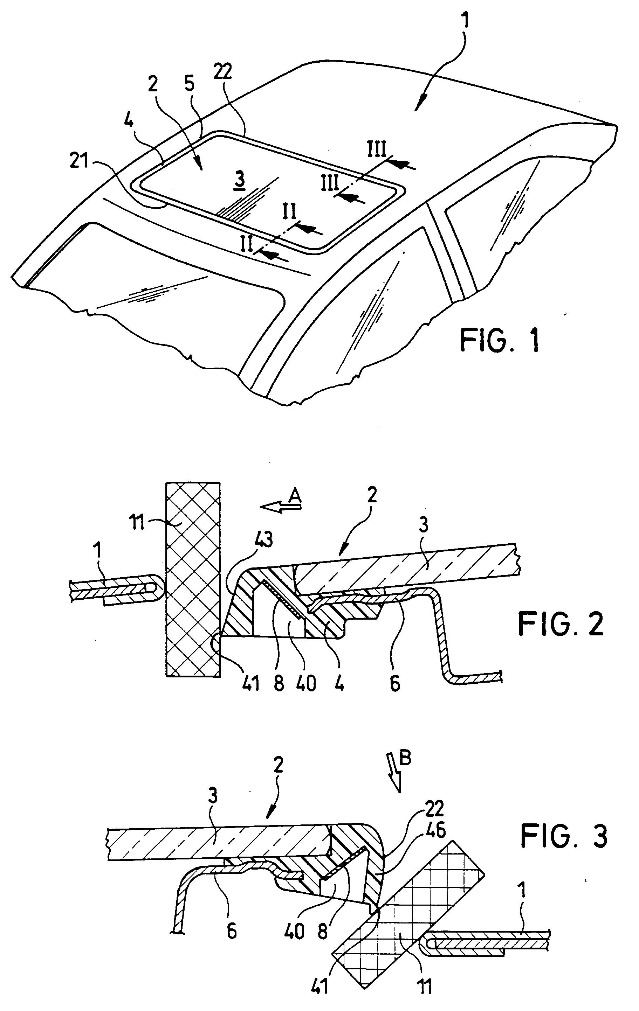

Bei einem solchen Deckel 2 können, wie in den Figuren 2 und 3 dargestellt, bei einem motorischen Schließvorgang Einklemm- Gegenstände 11 bzw. eingeklemmte Körperteile sowohl an der Vorderkante des Deckels 2 (Fig. 2) als auch im Bereich der Hinterkante des Deckels 2 (Fig. 3) zwischen diesem und dem festen Fahrzeugdach 1 beim Schließen eingeklemmt werden.

Für selbsttätig motorisch schließende Fahrzeugteile schreibt der Gesetzgeber eine Überwachung mittels einer Sensorik vor, die im Falle eines Einklemmens die Klemmkraft auf 100 Newton begrenzt.

Der Deckel 2 setzt sich aus einer Deckelplatte 3, die vorzugsweise aus Glas, alternativ auch aus transparentem Kunststoff besteht, einem im Bereich des Außenrandes angeordneten Befestigungsteil - hier Deckelinnenblech 6 - sowie einem beide Teile 3 bzw. 6 verbindenden Kunststoffrahmen 4 zusammen, der durch Umschäumen oder Umspritzen der Deckelplatte 3 und des Befestigungsteils 6 in einer Form hergestellt wird.

Gemäß der Erfindung ist vorgesehen, daß in diesen Kunststoffrahmen 4 wenigstens ein streifenförmiges Sensorelement 8 integriert ist, das beim Schließen des Deckels 2 im Einklemmfall durch eine partielle Deformation des Kunststoffrahmens 4 betätigt wird und dadurch ein Einklemmen eines Körperteils oder Gegenstandes signalisiert. Als Sensorelement 8 ist beispielsweise ein aus der DE 44 27 537 A1 bekanntes FSR-Element (force sensing resistor) verwendbar. Ein derartiges Sensorelement verändert unter Druck seinen Widerstand, so daß eine Verformung, die auf einen Einklemmfall hinweist, mittels einer Auswertelogik leicht erkannt werden kann.

In den Kunststoffrahmen 4 ist bevorzugt eine nach unten offene Nut 40 eingeformt, die annähernd V-förmig oder auch trapezförmig ausgebildet sein kann. Die Nut 40 begrenzt mit ihrer nach außen gerichteten Wand eine außenliegenden umlaufenden Steg 46 des Kunststoffrahmens 4, dessen außen liegende Anlagefläche 43 von oben nach unten schräg nach außen abfallend geneigt ist. Die am weitesten vorspringende untenliegende Außenkante 41 tritt im Einklemmfall gemäß Fig. 2 bei einer Bewegung in Pfeilrichtung A zuerst mit einem Einklemm-Gegenstand 11 in Kontakt. Die sich darüber erstreckende Anlagefläche 43 dient im geschlossenem Zustand zur Anlage am festen Fahrzeugdach 1 oder einer an diesem angeordneten nicht dargestellten Dichtung.

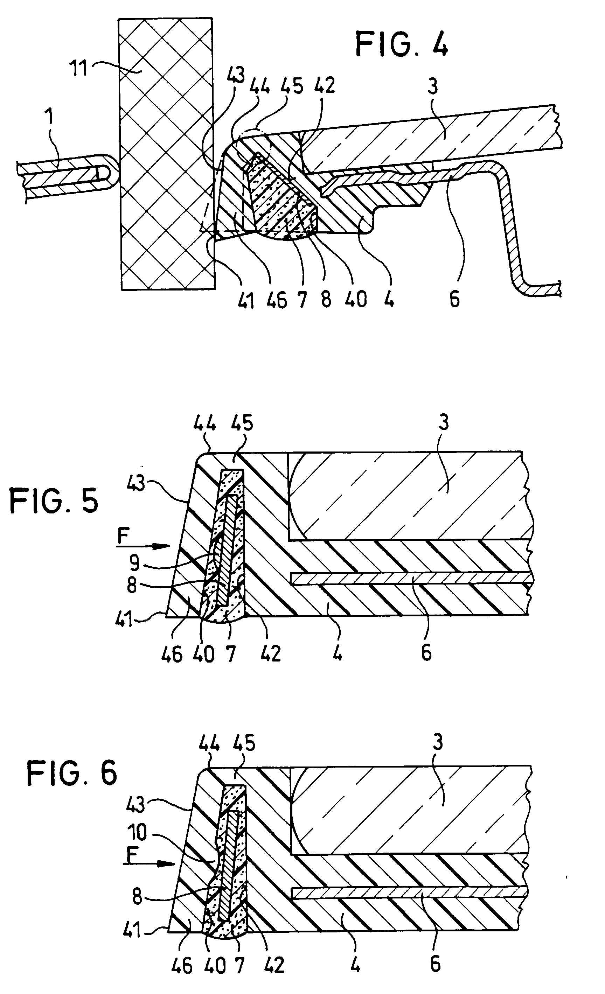

Wie in den Figuren 2 - 4 dargestellt, ist das Sensorelement 8 bevorzugt an einer von außen nach innen schräg nach unten geneigt verlaufenden Wand 42 der Nut 40 angeordnet. Ein sich oberhalb des Grundes der Nut 40 erstreckender Bereich 45 des Kunststoffrahmens 4 ist relativ dünnwandig ausgebildet und wirkt beim Auftreffen der Außenkante 41 auf einen Einklemm-Gegenstand 11 ähnlich wie ein elastisches Filmscharnier, so daß sich die Rippe 46 relativ leicht nach innen biegen läßt. Dabei wird das Sensorelement 8 entweder in seinem oberen in Fig. 4 durch den Kreis bei 45 bezeichneten Bereich deformiert, wodurch es bereits zu einer spürbaren Widerstandveränderung kommen kann.

Gemäß einer vorteilhaften Weiterbildung ist der gesamte Bereich der Nut 40 von einem gegenüber dem Material des Kunststoffrahmens 4 weicheren Material ausgefüllt, das bei einer Verformung der Kippe 46 als elastischer Puffer zur Übertragung der Druckkraft auf das Sensorelement 8 wirkt. In Fig. 4 ist der unverformte Zustand der Rippe 46 und des weicheren Materials 7 in gestrichelten Linien und der verformte Zustand in durchgezogenen Linien dargestellt.

Ebenso wie beim Einklemmen an der Vorderkante gemäß Fig. 2 oder 4 wird bei einem Absenken der Hinterkante des Deckels 2 (gemäß Pfeil B in Fig. 3) ein Einklemm-Gegenstand 11 durch die Deformation der Anlagefläche 43 sowie des in der Nut 40 vorhandenen, ebenfalls weicheren Materials 7 mittels des Sensorelements 8 erkannt.

Die Oberkante 44 des Kunststoffrahmens 4 ist in an sich bekannter Weise bündig mit der Oberkante der Deckelplatte 3 angeordnet. Das Deckelinnenblech 6 dient zur Versteifung des Deckels 2 sowie zur Anbringung zusätzlicher seitlicher Blenden oder zur Anbindung der Betätigungsmechanik des Deckels mittels Ausstellhebeln oder Kulissen. Das Deckelinnenblech 6 kann einteilig oder mehrteilig ausgebildet sein.

Bei der in Fig. 5 dargestellten Variante weist das Sensorelement 8 wenigstens einen der Außenkante des Kunststoffrahmens 4 zugewandten Drucknoppen 9 auf, der der Erhöhung der Empfindlichkeit bei Einwirken einer Druckkraft F auf die Vorderkante 21 bzw. die Hinterkante 22 des Deckels 2 dient.

In der Variante gemäß Fig. 6 ist hingegen ein Drucknoppen 10 an einer inneren Wand der Nut 40 vorgesehen, so daß die sich unter Einwirkung einer Kraft F verformende Rippe 46 über den Drucknoppen 10 punktförmig auf das Sensorelement 8 einwirkt, wodurch ein Einklemmfall früher erkannnt wird.

Die Herstellung des Deckels 2 erfolgt bevorzugt in einer Spritz- oder Gießform, in welche die Deckelplatte 3 und die Deckelinnenbleche 6 eingelegt werden, wobei ein zweiteiliges Werkzeug insgesamt die Außenkontur des Kunststoffrahmens 4 vorgibt. Das Sensorelement 8 kann entweder unmittelbar beim Spritzen, Gießen oder Umschäumen mit in den Kunststoffrahmen 4 integriert werden; es kann auch in einer zweiten Variante von einem in etwa vertikal zur Deckelplatte 3 bewegbaren Werkzeugteil gehalten werden und sich dadurch beim Spritzen oder Schäumen mit dem Material des Kunststoffrahmens 4 verbinden. Das genannte Werkzeugteil bildet dann beim Herausfahren die Nut 40. Diese kann dann im Wege des 2-Komponenten-Spritz- oder Schäumverfahrens mit dem weicheren elastischen Material 7 aufgefüllt werden. Als Material für den Kunststoffrahmen 4 eignet sich beispielsweise Polyurethan (PU) mit einer Shore-Härte von etwa 90; für das weichere eleastische Material ein PU-Schaum mit einer Shore-Härte von etwa 30.

Statt eines direkten Einbringens des Sensorelements 8 in den Kunststoffrahmen 4 beim Spritzen bzw. Schäumen oder Gießen ist auch ein nachträgliches Einbringen des Sensorelements 8 durch Kleben in eine eingeformte Nut 40 denkbar. Das Einbringen eines weicheren Materials in die Nut 40 kann ebenfalls in einem getrennten Arbeitsgang erfolgen.

Wenn vorstehend von einem Kantenbereich eines Deckels oder einer Deckelplatte gesprochen wird, so kann damit sowohl ein einzelner Bereich einer Langskante als auch der gesamte Umfangsbereich gemeint sein. Bei einem Deckel eines Schiebedaches wird es genügen, einen Einklemmschutz nur im Bereich von dessen Vorderkante vorzusehen. Bei einem Deckel eines Schiebehebedaches wird sinnvollerweise auch dessen Hinterkante mit einem Sensorelement ausgestattet sein. Ob auch die Seitenkanten mit Sensorelementen versehen sind, hängt von den seitlichen Blenden ab, die gegebenenfalls ein Einklemmen von Körperteilen oder Gegenständen durch ihre Formgebung ohnehin verhindern.

### Bezugszeichenliste

- 1: Fahrzeugdach
- 2: Deckel
- 3: Deckelplatte
- 4: Kunststoffrahmen
- 5: Dachöffnung
- 6: Deckelinnenblech
- 7: weicheres Material
- 8: Sensorelement
- 9: Drucknoppen (an 8)
- 10: Drucknoppen (an 4)
- 11: Einklemm-Gegenstand
- 21: Vorderkante (von 2)
- 22: Hinterkante (von 2)
- 40: Nut (in 4)
- 41: Außenkante (von 4)
- 42: Wand (von 40)
- 43: Anlagefläche (an 4)
- 44: Oberkante (von 4)
- 45: Bereich (über 40)
- 46: Steg (an 4)

## Patentansprüche

1. Deckel (2) eines öffnungsfähigen Fahrzeugdachs (1) mit einer Deckelplatte (3), die im Kantenbereich von einem angeschäumten oder angespritzten Kunststoffrahmen (4) umgeben wird, **dadurch gekennzeichnet,** daß in den Kunststoffrahmen (4) wenigstens ein Sensorelement (8) integriert ist, das beim Schließen des Deckels (2) im Einklemmfall aufgrund einer partiellen Deformation des Kunststoffrahmens (4) betätigt wird und ein Einklemmen eines Körperteils oder Gegenstandes signalisiert.

2. Deckel nach Anspruch 1, **dadurch gekennzeichnet,** daß an der Unterseite des Kunststoffrahmens (4) eine Nut (40) vorgesehen ist, die zur Aufnahme des Sensorelements (8) dient.

3. Deckel nach Anspruch 1 oder Anspruch 2, **dadurch gekennzeichnet,** daß am Sensorelement (8) ein der Außenkante (41) des Kunststoffrahmens (4) zugewandter Drucknoppen (9) angeordnet ist.

4. Deckel nach Anspruch 2, **dadurch gekennzeichnet,** daß an wenigstens einer der Wände (42) der Nut (40) ein dem Sensorelement (8) zugewandter Drucknoppen (10) angeordnet ist.

5. Deckel nach einem der Ansprüche 2 bis 4, **dadurch gekennzeichnet,** daß die Nut (40) von einem gegenüber dem Material des Kunststoffrahmens weicheren elastischen Material (7) ausgefüllt ist.

6. Deckel nach einem der Ansprüche 2 bis 5, **dadurch gekennzeichnet,** daß das Sensorelement (8) durch Kleben an einer Wand (42) der Nut (40) befestigt ist.

7. Deckel nach einem der Ansprüche 1 bis 6, **dadurch gekennzeichnet,** daß das Sensorelement (8) vollständig in das Material des Kunststoffrahmens (4) eingebettet ist.

8. Deckel nach einem der vorhergehenden Ansprüche, **dadurch gekennzeichnet,** daß eine Anlagefläche (43) an der Außenkante (41) des Deckels (2) schräg nach vorne unten abfallend geneigt ist.

9. Deckel nach einem der Ansprüche 2 bis 8, **dadurch gekennzeichnet,** daß die Nut (40) bis annähernd an die Oberkante (44) des Kunststoffrahmens (4) heranreicht und der darüberliegende Bereich (45) ein Scharnier für einen sich am Außenrand des Kunststoffrahmens (4) erstreckenden Steg (46) bildet.

10. Deckel nach einem der vorhergehenden Ansprüche, **dadurch gekennzeichnet,** daß das Sensorelement (8) von oben nach unten schräg nach innen abfallend angeordnet ist.

11. Deckel nach einem der vorhergehenden Ansprüche, **dadurch gekennzeichnet,** daß das Sensorelement (8) streifenförmig ausgebildet ist und sich zu mindestens im Bereich der Vorderkante (21) des Deckels (2) erstreckt.

12. Deckel nach einem der vorhergehenden Ansprüche, dessen Hinterkante über das feste Fahrzeugdach ausstellbar ist, **dadurch gekennzeichnet,** daß wenigstens ein Sensorelement (8) im Bereich der Hinterkante (22) angeordnet ist.
